# EUROPEAN PATENT SPECIFICATION

(11) **EP 3 236 392 B1**
(45) Date of publication and mention of the grant of the patent: **19.06.2019**
(21) Application number: 16000910.6
(22) Date of filing: 22.04.2016
(51) Int. Cl.: G06K 19/07

(54) **A RADIO FREQUENCY IDENTIFICATION (RFID) TAG AND A METHOD FOR LIMITING SUPPLY VOLTAGE OF A RFID TAG**
HOCHFREQUENZIDENTIFIKATIONS (RFID)-ETIKETT UND VERFAHREN ZUR BEGRENZUNG DER VERSORGUNGSSPANNUNG EINES RFID-ETIKETTS
ÉTIQUETTE D'IDENTIFICATION DE FRÉQUENCE RADIO (RFID) ET PROCÉDÉ DE LIMITATION DE TENSION D'ALIMENTATION D'UNE ÉTIQUETTE RFID

(43) Date of publication of application: 25.10.2017
(73) Proprietor: Farsens, S.L., 20009 Donostia - San Sebastián, Gipuzkoa (ES)
(72) Inventor: Beriain Rodríguez, Andoni, 20009 San Sebastián (Gipuzkoa) (ES); Zalbide Aguirrezabalaga, Ibon, 20011 San Sebastián (Gipuzkoa) (ES); Jiménez Irastorza, Ainara, 20018 San Sebastián (Gipuzkoa) (ES); Galarraga Martin, Iñaki, 20750 Zumaia (Gipuzkoa) (ES); Berenguer Pérez, Roque José, 20009 San Sebastián (Gipuzkoa) (ES); Alonso Domingo, Aritz, 20200 Beasain (Gipuzkoa) (ES); Navarro Perez, Ezequiel, 29540 Málaga (ES)
(74) Representative: Juncosa Miró, Jaime

(56) References cited:
- WO-A2-2006/123315
- US-B1- 6 304 613

## Description

### Technical Field

The present invention is directed, in general, to the field of radio frequency identification technology. In particular, the invention relates to a radio frequency identification (RFID) tag and a method for limiting supply voltage of a RFID tag, accurately, by controlling the power consumption thereof.

### Background of the Invention

Power consumption of a passive or semi-passive RFID tag should be low. However, given that these type of tags include a voltage limiter in order to avoid breaking the technology in presence of excessive voltage caused by excessive input power, their power consumption increases with the voltage.

When an external device, e.g. a battery, is connected to the RFID tag to make it function in Battery Assisted Passive (BAP) mode, the maximum battery voltage that can be used is limited by the limitation voltage of the RFID tag.

In order to accept a wide range of battery types assuring low current drain from the external device, the limitation voltage has to be as high as possible. However, in order to protect the device from high input power scenarios, a fast response time of the voltage limiter is required.

Unfortunately, there is a trade-off between limitation voltage precision and response time. The faster the response time, greater the variability of the limitation voltage, and thus lower the maximum acceptable battery voltage.

Present invention is focused on solving such a technical problem.

There are known some patents in this technical field.

US-B2-7482930 discloses a limiter for controlling an overvoltage in an RFID tag. The limiter includes a first limiter part and a second limiter part serially connected to the first limiter part. The second limiter part has at least one limit diode whose threshold voltage is lower than that of elements in the first limiter part. Accordingly, if an overvoltage is input, the limiter can maximize the input current drop so that the limiter can maximize the leakage voltage. As a result, the RFID tag can prevent the RFID driving part from being damaged due to the overvoltage. In addition, the RFID tag can normally operate regardless of the intensity of the driving voltage input from the RFID reader, so that the yields of products can improve.

US-B2-7839210 discloses a method and a circuit for detecting a radio-frequency signal, including at least one first MOS transistor with a channel of a first type, having its gate coupled to an input terminal capable of receiving said signal; a circuit for biasing the first transistor, capable of biasing it to a level lower than its threshold voltage; and a circuit for determining the average value of the current in the first transistor.

US 6304613 is considered the closest prior art for claims 1 and 11 and provides a data carrier processing system for receiving an amplitude-modulated carrier signal. The system includes rectifiers and a voltage limiter that limits the d.c. supply voltage that is provided by the rectifiers. The voltage limiter provides a delayed response to amplitude variations in the carrier signal, so as to avoid adverse effects on the modulation of the carrier signal, while also providing an un-delayed response to excess amplitude values, so as to avoid excessive d.c. supply voltage for circuit elements of the data carrier system.

WO 2006123315 discloses a transponder comprising an antenna and an antenna voltage limiter circuit adapted to limit an antenna voltage to a first voltage limit when the transponder is in a first operation mode and to a second voltage limit when the transponder is in a second operation mode, wherein the first operation mode is a mode in which the transponder receives data, and the second operation mode is a mode in which the transponder sends data.

However none of the current prior art documents solves said technical problem.

### Description of the Invention

An object of the present invention is to provide a radio frequency identification (RFID) tag, which as commonly in the field comprises:
- a first communication module adapted and configured to receive signals (e.g. RF signals) from a RFID reader, said first communication module including means for extracting energy from the received signals providing a supply voltage VDD to the RFID tag;
- at least one energy storage module in connection with and supplied by the first communication module adapted and configured to store said extracted energy from the received signals of the RFID reader; and
- a first voltage limiter adapted and configured to limit, during a start-up state of the RFID tag, said supply voltage VDD in order the latter not exceeding a given first threshold voltage value of the first voltage limiter comprised in a region between two given lower and upper voltage thresholds.

Different to the known proposals, an in a characteristic manner, the RFID tag further comprises: a second voltage limiter, different to and synchronized with said first voltage limiter, said second voltage limiter being adapted and configured to be activated during a stationary state of the RFID tag so that the supply voltage VDD of the RFID tag being always kept below a given second threshold voltage value of the second voltage limiter, the given second threshold voltage value having a given margin of tolerance.

According to the invention, the RFID tag may be passive, i.e. it does not include a battery and it depends on the strength of the RFID reader signal to cause to generate a response, or alternatively it may be semi-passive, i.e. it operates similarly to the passive tag, using the reader signal to cause a response from the tag, however in this case the semi-passive tag does have a battery for sensing or other functions, but not for data transmission.

According to an embodiment, the RFID also includes a digital logic controller in connection with the first and second voltage limiters to control the operation thereof during the start-up state and the stationary state of the RFID tag.

Preferably, both the first and second voltage limiters are circuits connected in parallel.

In addition, the given lower and upper voltage thresholds of the first voltage limiter preferably are 1.2 V and 3.6 V, respectively, and the given second threshold voltage value with the given margin of tolerance of the second voltage limiter preferably is 3.3 V ± 50 mV. A voltage reference signal is required for the second voltage limiter.

According to an embodiment, the first and second voltage limiters comprise one or more Zener diodes.

According to an embodiment, the first voltage limiter comprises a first stage dependent on a CMOS transistor threshold voltage arranged to generate a trigger signal when the supply voltage VDD exceeds said given first threshold voltage value of the first voltage limiter; a second stage arranged to multiply and rectify said generated trigger signal; and a third stage controlled by said second stage via a transistor that sinks a current from said supply voltage VDD maintaining its value below the given first threshold voltage value of the first voltage limiter.

Moreover, according to an embodiment, the second voltage limiter comprises a first stage including a comparator between a reference voltage signal VBG and a voltage VDDO proportional to said supply voltage VDD triggering an output signal when the supply voltage VDD is at least greater than said given second threshold voltage value; a second stage arranged to multiply and rectify said triggered output signal; and a third stage controlled by said second stage via a transistor that sinks a current from said supply voltage VDD maintaining its value below the given second threshold voltage value.

According to yet another embodiment, the proposed RFID tag may further include a second communication module adapted and configured to communicate with at least one external device (e.g. a sensor, an actuator or any other device consuming energy), and a power output in connection with and supplied by the second communication module adapted and configured to provide a power-supply voltage to said remote device using said stored energy.

It is accordingly an object of the present invention to provide also a method for limiting supply voltage of a RFID tag, the method comprising receiving, by a first communication module of said RFID tag, signals from a RFID reader, and extracting energy from the received signals providing a supply voltage VDD to the RFID tag; storing in at least one energy storage module of the RFID tag said extracted energy from the received signals of the RFID reader; providing via a power output in connection with and supplied by a second communication module of the RFID tag a power-supply voltage to an external device using said stored energy; and limiting, by a first voltage limiter, during a start-up state of the RFID tag, said supply voltage VDD in order the latter not exceeding a given first threshold voltage value of the first voltage limiter comprised in a region between two given lower and upper voltage thresholds.

Characteristically, the method further uses a second voltage limiter, different to and synchronized with said first voltage limiter, and activates the second voltage limiter during a stationary state of the RFID tag so that the supply voltage VDD of the RFID tag is kept below a given second threshold voltage value of the second voltage limiter, the given second threshold voltage value having a given margin of tolerance.

So, two different synchronized voltage limiters are used, the first one having a fast response time and the second one having high and accurate limitation voltage.

### Brief Description of the Drawings

The previous and other advantages and features will be more fully understood from the following detailed description of embodiments, with reference to the attached figures, which must be considered in an illustrative and non-limiting manner, in which:
Fig. 1 is a schematic illustration of a preferred embodiment of the proposed RFID tag.
Fig. 2 is a schematic illustration of another embodiment of the proposed RFID tag.
Fig. 3 is a schematic illustration of the two different voltage limiters by the present invention to control power consumption of the proposed RFID tag.
Figs. 4A and 4B illustrate a preferred embodiment of the first voltage limiter.
Figs. 5A and 5B illustrate a preferred embodiment of the second voltage limiter.
Fig. 6 is a flow chart illustrating a method for limiting power consumption of a RFID tag according to an embodiment of the present invention.

### Detailed Description of Preferred Embodiments

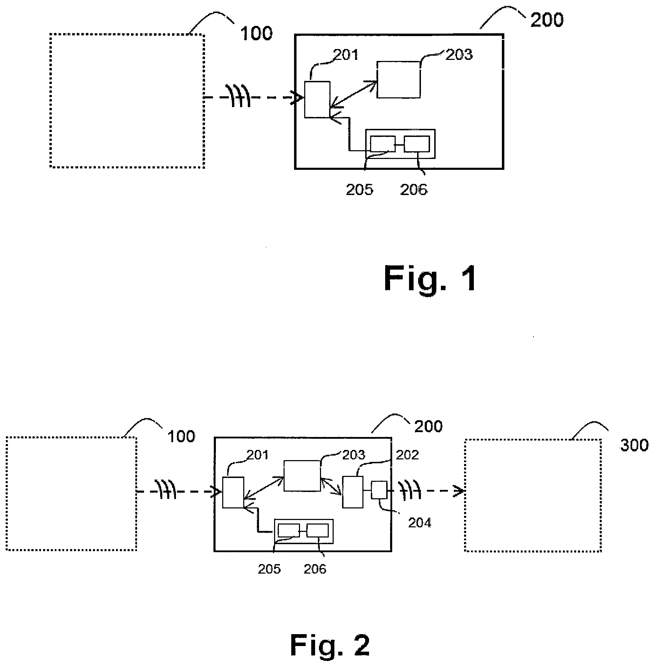

With reference to Fig. 1, this figure illustrates a preferred embodiment of the proposed RFID tag 200. According to this particular embodiment, the RFID tag 200 is a passive RFID tag, i.e. the RFID tag does not include a battery, and includes a communication module 201 (or first communication module), which is operatively connected to an energy storage module 203 such as a capacitor.

The first communication module 201 is configured to receive signals such as UHF RF signals from a RFID reader 100 (also illustrated in the figure), extracting energy from the received signals providing a supply voltage VDD to the RFID tag 200. The energy extracted from the received signals from the RFID reader 100 is stored by the energy stored module 203, i.e. the capacitor is charged.

In addition, the proposed RFID further includes two different voltage limiters 205 and 206 (first and second voltage limiters respectively) which are synchronized to obtain a fast response during a start-up of the RFID tag 200 and an accurate limiting value in powered operation of the RFID tag 200. We will refer as start-up process to the time period in which the RFID tag 200 powers up charging the energy storage module to 1.2V and stabilizes. We will refer to the state after the RFID tag 200 has been powered on and stabilized as stationary state. In the stationary state, a reference voltage is available in the internal circuitry of the RFID tag 200. This reference voltage is not available during the start-up process.

Fig. 2 illustrates another embodiment of the proposed RFID tag 200. In this case the proposed RFID tag 200 in addition to the elements previously described further includes a communication module 202 (or second communication module) which is connected to the energy storage module 203. A power output 204 in connection with and supplied by the second communication module 202 is also included. The second communication module 202 is provided for the communication with at least one external device 300 (e.g. a sensor, among others), and the power output 204 is provided for driving said external device 300 from the energy harvested (i.e. stored) by the RFID tag 200.

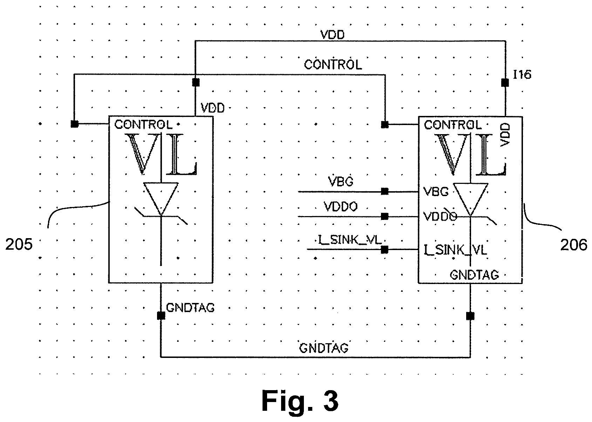

Referring now to Fig. 3, therein it is illustrated an embodiment of the two different voltage limiters 205, 206 which are connected in parallel. The first voltage limiter 205 is enabled during the start-up of the RFID tag 200, whereas the second voltage limiter 206 is enabled during the stationary state of the RFID tag 200. A voltage reference of the RFID tag 200 provides a "reference OK" signal (in the fig. 3, called "CONTROL"), that is used to switch from one limiter to the other taking into account that both limiters are synchronized. A digital logic controller can be used to provide said CONTROL signal.

For the start-up process of the RFID tag 200, it is necessary to protect the RFID tag 200 with the first voltage limiter 205 ensuring that the supply voltage VDD does not exceed a given first threshold voltage value comprised in a region between two given voltage thresholds, a lower one of preferably 1.2V and an upper one of preferably 3.6V. Reaction time of the first voltage limiter 205 has to be fast enough to ensure that the supply voltage VDD is always below said upper voltage value (i.e. below 3.6V) for the maximum input power supported by the RFID tag 200, which is 20dBm, and the minimum value of the capacitor, which is 1nF.

For the stationary state of the RFID tag 200, a second voltage limiter 206, more accurate than the first voltage limiter 205, is used. The second voltage limiter 206 keeps the supply voltage VDD of the RFID tag 200 below a given second threshold voltage value with a given margin of tolerance. Preferably, this given limiting threshold voltage value is 3.3V ±50mV. In this case, a voltage reference signal is required.

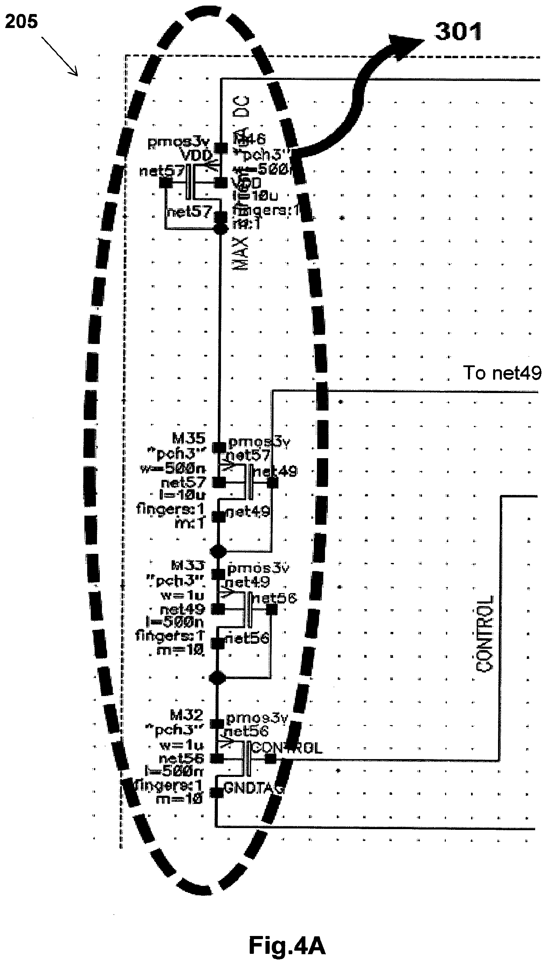

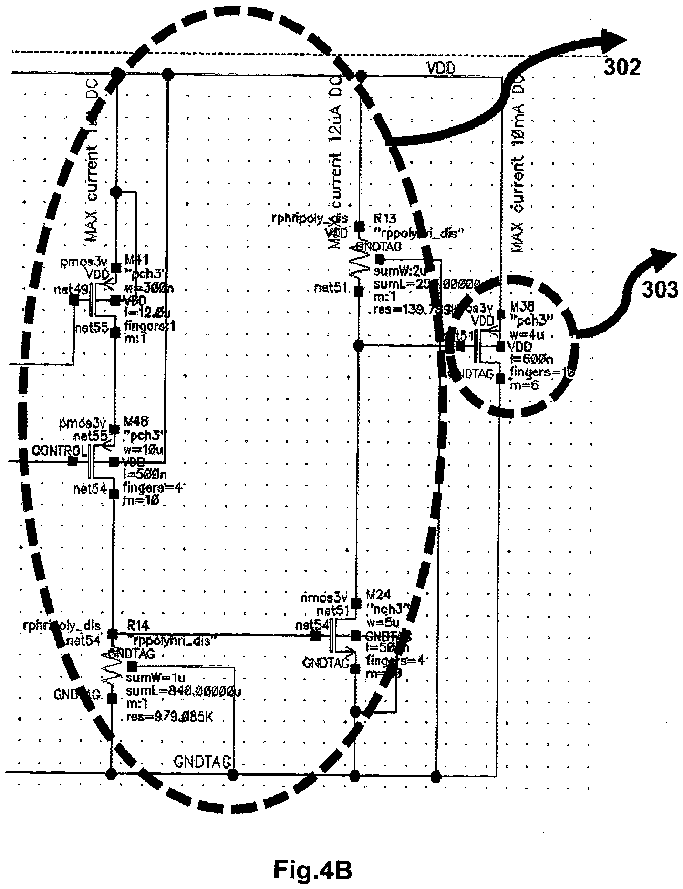

Figs. 4A and 4B illustrate a preferred embodiment of the first voltage limiter 205. According to this embodiment, the first voltage limiter 205 comprises a first stage 301 dependent on a CMOS transistor threshold voltage arranged to generate a slow trigger signal when the supply voltage VDD exceeds (in some alternatives embodiments it could be when it is also equal) said not exceeding said given first threshold voltage value of the first voltage limiter 205 ; a second stage 302 arranged to multiply and rectify said generated trigger signal so the limiter answer is fast; and a third stage (303), or output stage, controlled by said second stage 302 via a transistor that sinks a current from said supply voltage VDD maintaining its value below the given first threshold voltage value of the first voltage limiter 205.

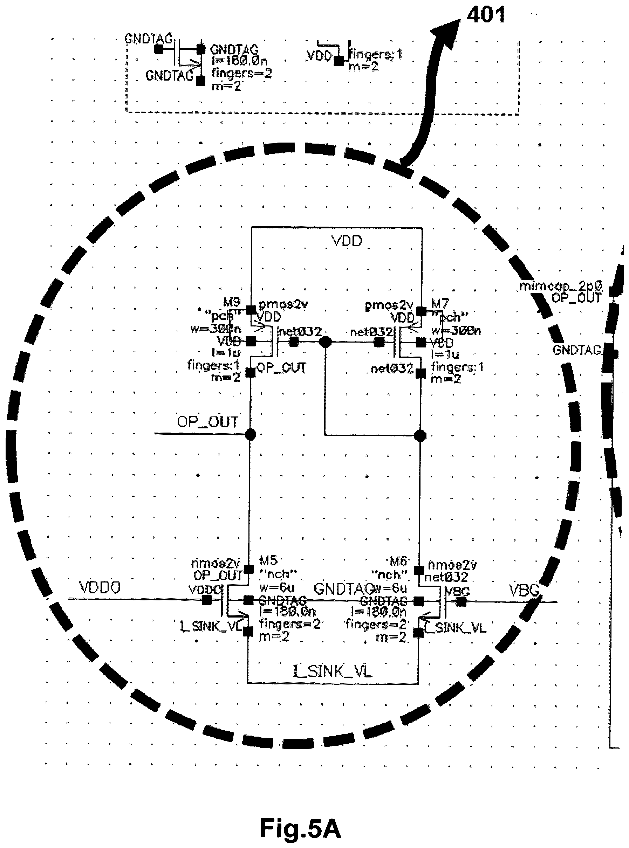

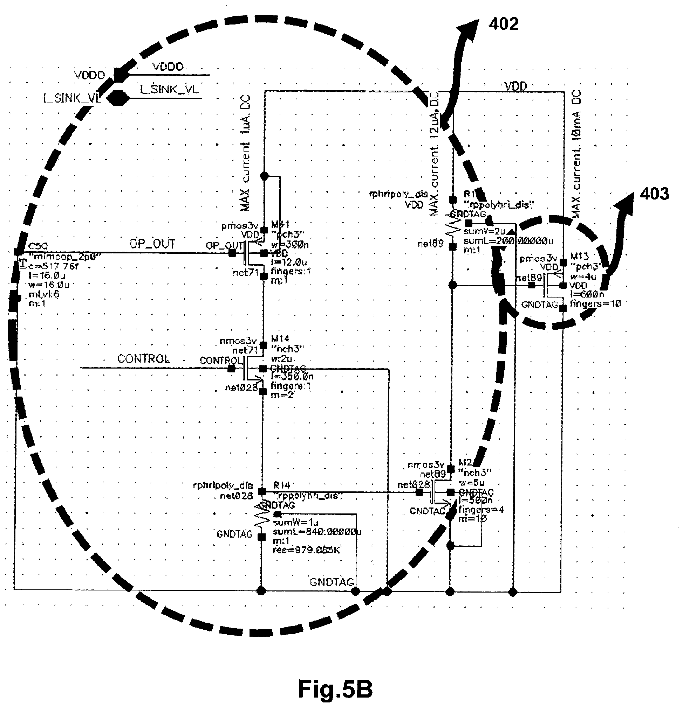

Figs. 5A and 5B illustrate a preferred embodiment of the second voltage limiter 206. According to this embodiment, the second voltage limiter 206 comprises a first stage 401 including a comparator between a reference voltage signal VBG and a voltage VDDO proportional to said supply voltage VDD triggering an output signal when the supply voltage VDD is at least greater (in some alternatives embodiments it could be when it is also equal) than said given second threshold voltage value; a second stage 402 arranged to multiply and rectify said triggered output signal; and a third stage 403, or output stage, controlled by said second stage 402 via a transistor that sinks a current from said supply voltage VDD maintaining its value below the given second threshold voltage value.

According to another embodiment, in this case not illustrated, the first and second voltage limiters comprise one or more Zener diodes.

According to another embodiment, in this case not illustrated either, the proposed RFID tag 200 of Figs. 1 and 2 is a semi-passive RFID tag. In this case the RFID tag 200 further includes a battery for sensing or other functions, but not for data transmission.

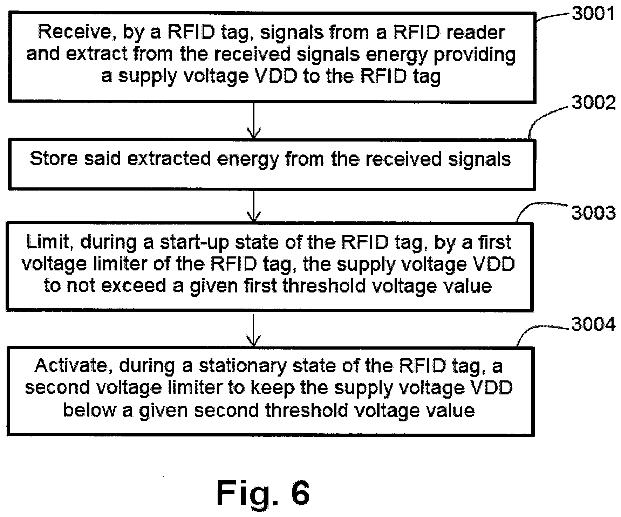

Referring now to Fig. 6, therein it is illustrated an embodiment of a method for limiting supply voltage of a RFID tag 200, either a passive or a semi-passive RFID tag. According to said method, at step 3001, a RFID tag 200 receives signals from a RFID reader 100 and extracts from the received signals energy providing a supply voltage VDD to the RFID tag 200. Then, at step 3002, the RFID tag 200 stores said extracted energy from the received signals of the RFID reader 100. Then, at step 3003, said supply voltage VDD is limited during a start-up of the RFID tag 200 by a first voltage limiter 205 of the RFID tag 200 in order the supply voltage not exceeding a given threshold voltage value of the first voltage limiter 205. Finally, at step 3004, a second voltage limiter 206 is activated during a stationary state of the RFID tag 200 to keep the supply voltage VDD below a given second threshold voltage value having a given margin of tolerance of the second voltage limiter 206.

With the energy stored in the energy storage module, the RFID tag 200 in an alternative embodiment may further power up an external device such as a sensor.

The scope of the present invention is defined in the attached claims.

## Claims

1. A radio frequency identification (RFID) tag, said RFID tag (200) comprising:
- a first communication module (201) adapted and configured to receive signals from a RFID reader (100), said first communication module (201) including means for extracting energy from the received signals providing a supply voltage VDD to the RFID tag (200);
- at least one energy storage module (203) in connection with and supplied by the first communication module (201) adapted and configured to store said extracted energy from the received signals of the RFID reader (100);
- a first voltage limiter (205) adapted and configured to limit said supply voltage VDD in order the latter not exceeding a given first threshold voltage value of the first voltage limiter (205) comprised in a region between two given lower and upper voltage thresholds; and
- a second voltage limiter (206), different to the first voltage limiter (205), adapted and configured to limit the supply voltage VDD in order the latter not exceeding a given second threshold voltage value of the second voltage limiter (206),
**characterized in that**:
- the first voltage limiter (205) is further adapted and configured to operate without a reference voltage in the internal circuitry of the RFID tag (200) during a start-up state thereof, wherein said start-up state comprising a time period in which the RFID tag (200) powers up charging the energy storage module (203) to a given voltage value and stabilizes; and
- the second voltage limiter (206) is synchronized with said first voltage limiter (205) to switch after the stabilization of the RFID tag (200) from the first voltage limiter (205) to the second voltage limiter (206), said second voltage limiter (206) being enabled during a stationary state of the RFID tag (200) in which a reference voltage signal VBG of the RFID tag (200) is available, said reference voltage signal VBG being used for said switching,
wherein the first voltage limiter (205) having a fast response time and the second voltage limiter (206) having high and accurate limitation voltage, so that the supply voltage VDD of the RFID tag (200) being kept always below the given second threshold voltage value of the second voltage limiter (206), the given second threshold voltage value having a given margin of tolerance.

2. The RFID tag of claim 1, further comprising a digital logic controller in connection with said first and second voltage limiters (205, 206) to control the operation thereof during said start-up state and said stationary state of the RFID tag (200).

3. The RFID tag of claim 1, wherein both the first and second voltage limiters (205, 206) are circuits connected in parallel.

4. The RFID tag of claim 3, wherein the first and second voltage limiters (205, 206) comprises one or more Zener diodes.

5. The RFID tag of claim 1, wherein said given lower and upper voltage thresholds of the first voltage limiter (205) are 1.2 V and 3.6 V, respectively, and wherein said given second threshold voltage value with the given margin of tolerance of the second voltage limiter (206) is 3.3 V ± 50 mV.

6. The RFID tag of claim 1, wherein the first voltage limiter (205) comprises:
- a first stage (301) dependent on a CMOS transistor threshold voltage arranged to generate a trigger signal when the supply voltage VDD exceeds said given first threshold voltage value of the first voltage limiter (205);
- a second stage (302) arranged to multiply and rectify said generated trigger signal; and
- a third stage (303) controlled by said second stage (302) via a transistor that sinks a current from said supply voltage VDD maintaining its value below the given first threshold voltage value of the first voltage limiter (205).

7. The RFID tag of claim 1, wherein the second voltage limiter (206) comprises:
- a first stage (401) including a comparator between said reference voltage signal VBG and a voltage VDDO proportional to said supply voltage VDD triggering an output signal when the supply voltage VDD is at least greater than said given second threshold voltage value of the second voltage limiter (206);
- a second stage (402) arranged to multiply and rectify said triggered output signal; and
- a third stage (403) controlled by said second stage (402) via a transistor that sinks a current from said supply voltage VDD maintaining its value below the given second threshold voltage value of the second voltage limiter (206).

8. The RFID tag of claim 1, further comprising:
- a second communication module (202) adapted and configured to communicate with at least one external device (300); and
- a power output (204) in connection with and supplied by the second communication module (202) adapted and configured to provide a power-supply voltage to said at least one remote device (300) using said stored energy.

9. The RFID tag of any of previous claims, comprising a passive RFID tag.

10. The RFID tag of any of previous claims 1 to 8, comprising a semi-passive RFID tag, the RFID tag (200) further comprising a battery.

11. A method for limiting supply voltage of a radio frequency identification (RFID) tag, comprising:
- receiving, by a first communication module (201) of said RFID tag (200), signals from a RFID reader (100), and extracting energy from the received signals providing a supply voltage VDD to the RFID tag (200);
- storing in at least one energy storage module (203) of the RFID tag (200) said extracted energy from the received signals of the RFID reader (100);
- limiting, by a first voltage limiter (205), said supply voltage VDD in order the latter not exceeding a given first threshold voltage value of the first voltage limiter (205) comprised in a region between two given lower and upper voltage thresholds; and
- limiting, by a second voltage limiter (206) different to said first voltage limiter (205), said supply voltage VDD in order the latter not exceeding a given second threshold voltage value of the second voltage limiter (206) comprised in a region between two given lower and upper voltage thresholds,
the method being **characterized in that**:
- the first voltage limiter (205) operates without a reference voltage of internal circuitry of the RFID tag (200) during a start-up state thereof, wherein said start-up state comprising a time period in which the RFID tag (200) powers up charging the energy storage module (203) to a given voltage value and stabilizes; and
- the second voltage limiter (206), is synchronized with said first voltage limiter (205), by switching, after said stabilization of the RFID tag (200), from the first voltage limiter (205) to the second voltage limiter (206), the latter being enabled during a stationary state of the RFID tag (200) in which a reference voltage signal VBG of the RFID tag (200) is available, said reference voltage signal VBG being used for said switching,
wherein the first voltage limiter (205) having a fast response time and the second voltage limiter (206) having high and accurate limitation voltage, so that the supply voltage VDD of the RFID tag (200) is kept below the given second threshold voltage value of the second voltage limiter (206), the given second threshold voltage value having a given margin of tolerance.

12. The method of claim 11, further comprising providing via a power output (204) of the RFID tag (200) in connection with and supplied by a second communication module (202) of the RFID tag (200) a power-supply voltage to an external device (300) using said stored energy.

## Patentansprüche

1. Hochfrequenzidentifikations (RFID)-Tag, wobei das genannte RFID-Tag (200) umfasst:
- ein erstes Kommunikationsmodul (201), das zum Empfangen von Signalen von einem RFID-Lesegerät (100) geeignet und ausgelegt ist, wobei das genannte erste Kommunikationsmodul (201) Mittel zum Extrahieren von Energie aus den empfangenen Signalen beinhaltet, womit dem RFID-Tag (200) eine Versorgungsspannung VDD bereitgestellt wird;
- mindestens ein Energiespeichermodul (203) in Verbindung mit und versorgt durch das erste Kommunikationsmodul (201), das zum Speichern der genannten, aus den empfangenen Signalen des RFID-Lesegeräts (100) extrahierten Energie geeignet und ausgelegt ist;
- einen ersten Spannungsbegrenzer (205), der zum Begrenzen der genannten Versorgungsspannung VDD geeignet und ausgelegt ist, damit diese einen gegebenen ersten Schwellenspannungswert des ersten Spannungsbegrenzers (205) in einem Bereich zwischen zwei gegebenen Spannungsschwellen, einer unteren und einer oberen, nicht überschreitet; und
- einen zweiten Spannungsbegrenzer (206), der nicht mit dem ersten Spannungsbegrenzer (205) identisch ist, der zum Begrenzen der Versorgungsspannung VDD geeignet und ausgelegt ist, damit diese einen gegebenen zweiten Schwellenspannungswert des zweiten Spannungsbegrenzers (206) nicht überschreitet,
**dadurch gekennzeichnet, dass**:
- der erste Spannungsbegrenzer (205) ferner so ausgestaltet und konfiguriert ist, dass er während eines Anlaufzustandes des RFID-Tags (200) ohne Referenzspannung in der internen Schaltung des RFID-Tags (200) arbeitet, wobei der genannte Anlaufzustand einen Zeitraum umfasst, in dem das RFID-Tag (200) das Energiespeichermodul (203) auf einen gegebenen Spannungswert auflädt und sich stabilisiert;
- der zweite Spannungsbegrenzer (206) mit dem genannten ersten Spannungsbegrenzer (205) so synchronisiert ist, dass nach der Stabilisierung des RFID-Tags (200) von dem ersten Spannungsbegrenzer (205) auf den zweiten Spannungsbegrenzer (206) umgeschaltet wird, wobei der genannte zweite Spannungsbegrenzer (206) während eines stationären Zustands des RFID-Tags (200), in dem ein Referenzspannungssignal VBG des RFID-Tags (200) vorliegt, aktiviert wird, wobei das genannte Referenzspannungssignal VBG für das genannte Umschalten verwendet wird, wobei der erste Spannungsbegrenzer (205) eine schnelle Reaktionszeit aufweist und der zweite Spannungsbegrenzer (206) eine hohe und genaue Begrenzungsspannung aufweist, so dass die Versorgungsspannung VDD des RFID-Tags (200) immer unter dem gegebenen zweiten Schwellenspannungswert des zweiten Spannungsbegrenzers (206) bleibt, wobei der gegebene zweite Schwellenspannungswert einen gegebenen Toleranzbereich aufweist.

2. RFID-Tag nach Anspruch 1, ferner umfassend eine Digital-Logiksteuerung in Verbindung mit dem genannten ersten und zweiten Spannungsbegrenzer (205, 206), die deren Betrieb während des genannten Anlaufzustands und des genannten stationären Zustands des RFID-Tags (200) steuert.

3. RFID-Tag nach Anspruch 1, wobei der erste und zweite Spannungsbegrenzer (205, 206) parallel geschaltete Schaltkreise sind.

4. RFID-Tag nach Anspruch 3, wobei der erste und zweite Spannungsbegrenzer (205, 206) eine oder mehrere Zener-Dioden umfassen.

5. RFID-Tag nach Anspruch 1, wobei die genannten gegebenen unteren und oberen Spannungsschwellen des ersten Spannungsbegrenzers (205) 1,2 V beziehungsweise 3,6 V betragen und wobei der genannte gegebene zweite Spannungsschwellenwert mit dem gegebenen Toleranzbereich des zweiten Spannungsbegrenzers (206) 3,3 V ± 50 mV beträgt.

6. RFID-Tag nach Anspruch 1, wobei der erste Spannungsbegrenzer (205) umfasst:
- eine erste Stufe (301), basierend auf einer CMOS-Transistor-Schwellenspannung, die zum Erzeugen eines Auslösesignals vorgesehen ist, wenn die Versorgungsspannung VDD den genannten gegebenen ersten Schwellenspannungswert des ersten Spannungsbegrenzers (205) überschreitet;
- eine zweite Stufe (302), die zum Vervielfältigen und Gleichrichten des genannten erzeugten Auslösesignals vorgesehen ist; und
- eine dritte Stufe (303), die von der genannten zweiten Stufe (302) über einen Transistor gesteuert wird, der einen Strom aus der genannten Versorgungsspannung VDD absenkt und dessen Wert unter dem gegebenen ersten Schwellenspannungswert des ersten Spannungsbegrenzers (205) hält.

7. RFID-Tag nach Anspruch 1, wobei der zweite Spannungsbegrenzer (206) umfasst:
- eine erste Stufe (401), enthaltend einen Komparator zwischen dem genannten Referenzspannungssignal VBG und einer zu der genannten Versorgungsspannung VDD proportionalen Spannung VDDO, der ein Ausgangssignal auslöst, wenn die Versorgungsspannung VDD mindestens größer als der genannte gegebene zweite Schwellenspannungswert des zweiten Spannungsbegrenzers (206) ist;
- eine zweite Stufe (402), die zum Vervielfältigen und Gleichrichten des genannten erzeugten Auslösesignals vorgesehen ist; und
- eine dritte Stufe (403), die von der genannten zweiten Stufe (402) über einen Transistor gesteuert wird, der einen Strom aus der genannten Versorgungsspannung VDD absenkt und dessen Wert unter dem gegebenen zweiten Schwellenspannungswert des zweiten Spannungsbegrenzers (206) hält.

8. RFID-Tag nach Anspruch 1, ferner umfassend:
- ein zweites Kommunikationsmodul (202), das zum Kommunizieren mit mindestens einer externen Vorrichtung (300) geeignet und ausgelegt ist; und
- einen Leistungsausgang (204) in Verbindung mit und versorgt durch das zweite Kommunikationsmodul (202), der zum Bereitstellen einer Versorgungsspannung für die genannte mindestens eine fernliegende Vorrichtung (300) unter Verwendung der genannten gespeicherten Energie geeignet und ausgelegt ist.

9. RFID-Tag nach einem der vorstehenden Ansprüche, umfassend ein passives RFID-Tag.

10. RFID-Tag nach einem der vorstehenden Ansprüche 1 bis 8, umfassend ein semipassives RFID-Tag, wobei das RFID-Tag (200) ferner eine Batterie umfasst.

11. Verfahren zum Begrenzen der Versorgungsspannung eines Hochfrequenzidentifikations (RFID)-Tags, umfassend:
- Empfangen von Signalen von einem RFID-Lesegerät (100) durch ein erstes Kommunikationsmodul (201) des genannten RFID-Tags (200) und Extrahieren von Energie aus den empfangenen Signalen zur Bereitstellung einer Versorgungsspannung VDD für das RFID-Tag (200);
- Speichern der aus den empfangenen Signalen des RFID-Lesers (100) genannten extrahierten Energie in mindestens einem Energiespeichermodul (203) des RFID-Tags (200);
- Begrenzen der genannten Versorgungsspannung VDD durch einen ersten Spannungsbegrenzer (205), damit diese einen gegebenen ersten Schwellenspannungswert des ersten Spannungsbegrenzers (205) in einem Bereich zwischen zwei gegebenen Spannungsschwellen, einer unteren und einer oberen, nicht überschreitet; und
- Begrenzen der genannten Versorgungsspannung VDD durch einen zweiten Spannungsbegrenzer (206), der nicht mit dem genannten ersten Spannungsbegrenzer (205) identisch ist, damit diese einen gegebenen zweiten Schwellenspannungswert des zweiten Spannungsbegrenzers (206) in einem Bereich zwischen zwei gegebenen Spannungsschwellen, einer unteren und einer oberen, nicht überschreitet,
wobei das Verfahren **dadurch gekennzeichnet ist, dass**:
- der erste Spannungsbegrenzer (205) während eines Anlaufzustandes des RFID-Tags (200) ohne Referenzspannung der internen Schaltung des RFID-Tags (200) arbeitet, wobei der genannte Anlaufzustand einen Zeitraum umfasst, in dem das RFID-Tag (200) das Energiespeichermodul (203) auf einen gegebenen Spannungswert auflädt und sich stabilisiert; und
- der zweite Spannungsbegrenzer (206) mit dem genannten ersten Spannungsbegrenzer (205) so synchronisiert ist, dass nach der genannten Stabilisierung des RFID-Tags (200) von dem ersten Spannungsbegrenzer (205) auf den zweiten Spannungsbegrenzer (206) umgeschaltet wird, wobei letzterer während eines stationären Zustands des RFID-Tags (200), in dem ein Referenzspannungssignal VBG des RFID-Tags (200) vorliegt, aktiviert wird, wobei das genannte Referenzspannungssignal VBG für das genannte Umschalten verwendet wird, wobei der erste Spannungsbegrenzer (205) eine schnelle Reaktionszeit aufweist und der zweite Spannungsbegrenzer (206) eine hohe und genaue Begrenzungsspannung aufweist, so dass die Versorgungsspannung VDD des RFID-Tags (200) immer unter dem gegebenen zweiten Schwellenspannungswert des zweiten Spannungsbegrenzers (206) bleibt, wobei der gegebene zweite Schwellenspannungswert einen gegebenen Toleranzbereich aufweist.

12. Verfahren nach Anspruch 11, ferner umfassend das Bereitstellen einer Versorgungsspannung für eine externe Vorrichtung (300) unter Verwendung der genannten gespeicherten Energie über einen Leistungsausgang (204) des RFID-Tags (200), der in Verbindung mit einem zweiten Kommunikationsmodul (202) des RFID-Tags (200) ist und durch dieses versorgt wird.

## Revendications

1. Une étiquette d'identification par radiofréquence (RFID), cette étiquette RFID (200) comportant :
- un premier module de communication (201), adapté et configuré pour recevoir des signaux provenant d'un lecteur RFID (100), ce premier module de communication (201) comprenant des moyens pour extraire de l'énergie des signaux reçus fournissant une tension d'alimentation VDD à l'étiquette RFID (200) ;
- au moins un module de stockage d'énergie (203) en relation avec et alimenté par le premier module de communication (201) adapté et configuré pour stocker cette énergie extraite des signaux reçus du lecteur RFID (100) ;
- un premier limiteur de tension (205) adapté et configuré pour limiter cette tension d'alimentation VDD afin que celle-ci ne dépasse pas une certaine première valeur de tension seuil du premier limiteur de tension (205) comprise dans une région entre deux certaines tensions seuil inférieure et supérieure ; et
- un deuxième limiteur de tension (206) différent du premier limiteur de tension (205), adapté et configuré pour limiter la tension d'alimentation VDD afin que celle-ci ne dépasse pas une certaine deuxième valeur de tension seuil du deuxième limiteur de tension (206),
**caractérisé en ce que** :
- le premier limiteur de tension (205) est par ailleurs adapté et configuré pour fonctionner sans une tension de référence dans la circuiterie interne de l'étiquette RFID (200) durant son état de démarrage, où cet état de démarrage comporte une période de temps pendant lequel l'étiquette RFID (200) est alimentée en chargeant le module de stockage d'énergie (203) à une certaine valeur de tension et se stabilise ; et
- le deuxième limiteur de tension (206) est synchronisé avec ce premier limiteur de tension (205) pour commuter après la stabilisation de l'étiquette RFID (200) du premier limiteur de tension (205) au deuxième limiteur de tension (206), ce deuxième limiteur de tension (206) étant habilité durant un état stationnaire de l'étiquette RFID (200) dans lequel un signal de tension de référence VBG de l'étiquette RFID (200) est disponible, ce signal de tension de référence VBG étant utilisé pour cette commutation,
où le premier limiteur de tension (205) a un temps de réponse rapide et le deuxième limiteur de tension (206) a une tension à limitation élevée et exacte, de sorte que la tension d'alimentation VDD de l'étiquette RFID (200) reste toujours au-dessous de la deuxième certaine valeur de tension seuil du deuxième limiteur de tension (206), la deuxième certaine valeur de tension seuil ayant une certaine marge de tolérance.

2. L'étiquette RFID de la revendication 1, comportant par ailleurs un contrôleur logique numérique en relation avec ces premier et deuxième limiteurs de tension (205, 206) pour contrôler leur fonctionnement durant cet état de démarrage et cet état stationnaire de l'étiquette RFID (200).

3. L'étiquette RFID de la revendication 1, dans laquelle aussi bien le premier que le deuxième limiteurs (205, 206) sont des circuits connectés en parallèle.

4. L'étiquette RFID de la revendication 3, dans laquelle les premier et deuxième limiteurs de tension (205, 206) comportent une ou plusieurs diodes Zener.

5. L'étiquette RFID de la revendication 1, dans laquelle ces certains seuils de tension plus basse et plus haute du premier limiteur de tension (205) sont 1,2V et 3,6 V, respectivement et dans laquelle cette deuxième certaine valeur de tension seuil ayant la certaine marge de tolérance du deuxième limiteur de tension (206) est 3,3 V ± 50 mV.

6. L'étiquette RFID de la revendication 1, dans laquelle le premier limiteur de tension (205) comporte :
- une première étape (301) dépendant d'une tension seuil de transistor CMOS agencée pour générer un signal de déclenchement lorsque la tension d'alimentation VDD dépasse cette première certaine valeur seuil du premier limiteur de tension (205) ;
- une deuxième étape (302) agencée pour multiplier et rectifier ce signal de déclenchement généré ; et
- une troisième étape (303) contrôlée par cette deuxième étape (302) par le biais d'un transistor qui fait s'écouler un courant provenant de cette tension d'alimentation VDD en conservant sa valeur au-dessous de la première certaine valeur de tension seuil du premier limiteur de tension (205).

7. L'étiquette RFID de la revendication 1, dans laquelle le deuxième limiteur de tension (206) comporte :
- une première étape (401) comprenant un comparateur entre ce signal de tension de référence VBG et une tension VDDO proportionnelle à cette tension d'alimentation VDD, déclenchant un signal de sortie lorsque la tension d'alimentation VDD est au moins aussi grande que cette deuxième certaine valeur de tension seuil du deuxième limiteur de tension (206) ;
- une deuxième étape (402) agencée pour multiplier et rectifier ce signal de sortie déclenché ; et
- une troisième étape (403) contrôlée par cette deuxième étape (402) par le biais d'un transistor qui fait s'écouler un courant provenant de cette tension d'alimentation VDD en maintenant sa valeur au-dessous de la deuxième certaine valeur seuil du deuxième limiteur de tension (206).

8. L'étiquette RFID de la revendication 1, comportant par ailleurs :
- un deuxième module de communication (202) adapté et configuré pour communiquer avec au moins un dispositif externe (300) ; et
- une puissance de sortie (204) en relation avec et alimentée par le deuxième module de communication (202) adaptée et configurée pour fournir une tension d'alimentation de puissance à cet au moins un dispositif à distance (300) en utilisant cette énergie stockée.

9. L'étiquette RFID d'une quelconque des revendications précédentes, comportant une étiquette RFID passive.

10. L'étiquette RFID d'une quelconque des revendications 1 à 8, comprenant une étiquette RFID semi passive, l'étiquette RFID (200) comportant par ailleurs une batterie.

11. Une méthode pour limiter la tension d'alimentation d'une étiquette d'identification par radiofréquence (RFID), comportant :
- recevoir, par un premier module de communication (201) de cette étiquette RFID (200), des signaux provenant d'un lecteur RFID (100) et extraire de l'énergie à partir des signaux reçus fournissant une tension d'alimentation VDD à l'étiquette RFID (200) ;
- stocker dans au moins un module de stockage d'énergie (203) de l'étiquette RFID (200) cette énergie extraite provenant des signaux reçus du lecteur RFID (100) ;
- limiter, par un premier limiteur de tension (205), cette tension d'alimentation VDD afin que celle-ci ne dépasse pas une première certaine valeur seuil du premier limiteur de tension (205) comprise dans une région entre deux seuils de tension plus basse et plus haute ; et
- limiter, par un deuxième limiteur de tension (206) différent de ce premier limiteur de tension (205), cette tension d'alimentation VDD afin que celle-ci ne dépasse pas une deuxième certaine valeur de tension seuil du deuxième limiteur de tension (206) comprise dans une région entre deux certains seuils de tension plus basse et plus haute,
la méthode étant **caractérisée en ce que :**
- le premier limiteur de tension (205) fonctionne sans une tension de référence de circuiterie interne de l'étiquette RFID (200) durant son état de démarrage, où cet état de démarrage comprend une période de temps pendant laquelle l'étiquette RFID (200) s'alimente en chargeant le module de stockage d'énergie (203) à une certaine valeur de tension et se stabilise ; et
- le deuxième limiteur de tension (206) est synchronisé avec ce premier limiteur de tension (205), par la commutation, après cette stabilisation de l'étiquette RFID (200), du premier limiteur de tension (205) au deuxième limiteur de tension (206), celui-ci étant habilité durant un état stationnaire de l'étiquette RFID (200) dans lequel un signal de tension de référence VBG de l'étiquette RFID (200) est disponible, ce signal de tension de référence VBG étant utilisé pour cette commutation,
où le premier limiteur de tension (205) a un temps de réponse rapide et le deuxième limiteur de tension (206) a une tension à limitation élevée et exacte, de sorte que la tension d'alimentation VDD de l'étiquette RFID (200) reste toujours au-dessous de la deuxième certaine valeur de tension seuil du deuxième limiteur de tension (206), la deuxième certaine valeur de tension seuil ayant une certaine marge de tolérance.

12. La méthode de la revendication 11, comportant par ailleurs fournir par le biais d'une puissance de sortie (204) de l'étiquette RFID (200) en relation avec et alimentée par un deuxième module de communication (202) de l'étiquette RFID (200) une tension d'alimentation de puissance à un dispositif externe (300) en utilisant cette énergie stockée.
